# EUROPÄISCHE PATENTSCHRIFT

(11) **EP 2 196 277 B1**
(45) Veröffentlichungstag und Bekanntmachung des Hinweises auf die Patenterteilung: **13.07.2016**
(21) Anmeldenummer: 08105938.8
(22) Anmeldetag: 04.12.2008
(51) Int. Cl.: B23K 9/095, B23K 9/32

(54) **Schweiß- oder Lötvorrichtung mit Bedieneinheit**
Welding or soldering device with operating unit
Dispositif de soudure doté d'une unité de commande

(43) Veröffentlichungstag der Anmeldung: 16.06.2010
(73) Patentinhaber: EWM AG, 56271 Mündersbach (DE)
(72) Erfinder: Szczesny, Michael, 56235, Ransbach-Baumbach (DE); Szczesny, Bernd, 56271, Mündersbach (DE)
(74) Vertreter: Cohausz & Florack

(56) Entgegenhaltungen:
- EP-A1- 1 702 707
- DE-U1- 9 301 390
- US-A- 4 717 805
- US-A- 6 103 994
- US-A1- 2005 162 399
- US-A1- 2007 262 065

## Beschreibung

Die Erfindung betrifft eine Vorrichtung zum Schweißen oder Löten von Werkstücken mit einem versorgungsspannungsgespeisten Leistungsteil mit einer Steuerungseinheit, der einer Bedieneinheit zugeordnet ist, über deren Bedienfeld die Parameter für den Schweißprozess vom Benutzer vorgebbar sind, wobei das Bedienfeld mindestens ein Bedienelement aufweist und dem Bedienfeld mindestens ein Anzeigemittel zugeordnet ist.

Weiterhin betrifft die Erfindung ein entsprechendes Verfahren.

Vorrichtungen zum Schweißen oder Löten von Werkstücken der obigen Art sind aus der Praxis bekannt. Eine solche Vorrichtung weist auf der der Bedienungsperson zugewandten Seite des Gehäuses eine Bedieneinheit auf, über die der Benutzer die für den Schweißprozess gewünschten Parameter einstellen kann. Hierzu ist ein Bedienfeld vorgesehen, auf dem sich einerseits eine Vielzahl von Bedienungselementen, beispielsweise Schalter, Potentiometer, etc. befinden, über die die entsprechenden Schweißprozessparameter vorgegeben und eingestellt werden. Beispielsweise erfolgt die Einstellung des Schweißstromes über einen als Potentiometer ausgestalteten Drehknopf. Ein anderes Bedienelement ist beispielsweise als Umschalter gestaltet, mittels dem sich zwischen unterschiedlichen Schweißverfahren, zum Beispiel E-Hand-Schweißen und WIG-Schweißen umschalten lässt. Andererseits sind dem Bedienfeld zugeordnete Signalisierungsmittel vorgesehen, um bestimmte Zustände zu signalisieren, beispielsweise die Betriebsbereitschaft oder eine Störung im Falle einer erhöhten Temperatur.

Die US 6,103,994 offenbart ein Schweißgerät mit einer Fernbedienung, die eingerichtet ist, einen Betriebsparameter des Schweißgeräts (z.B. den Schweißstrom) zu steuern, und eine Steuerschaltung zum Empfangen eines Fernbedienungssignals von der Fernbedienung und zum Bestimmen der Art der Fernbedienung basierend auf dem Fernbedienungssignal. Das Schweißgerät umfasst weiterhin eine Betriebsparameterauswahlvorrichtung (z.B. Schweißstromstärke) und eine Schweißprozessauswahlvorrichtung (z.B. WIG, MSG) die auf einem Bedienfeld angebracht sind. Die Steuerschaltung empfängt ein Betriebsparameterauswahlsignal von der Betriebsparameterauswahlvorrichtung und ein Schweißprozessauswahlsignal von der Schweißprozessauswahlvorrichtung und steuert einen Betriebsparameter entweder mittels des Fernbedienungssignals oder mittels des Betriebsparameterauswahlsignals basierend auf dem Schweißprozessauswahlsignal. Außerdem deaktiviert die Steuerschaltung gezielt die Betriebsparameterauswahlvorrichtung wenn der Betriebsparameter mittels des Fernbedienungssignals gesteuert wird.

Die US 2007/0262065 A1 beschreibt Schweißsysteme und Programmierwerkzeuge, die ein Touchscreen basiertes Schweißsystemkonfigurationswerkzeug bereitstellen, dass einen Touchscreen für die Gestaltung einer Wellenform eines Leistungsteils oder für die Konfiguration einer Ablaufsteuereinheit des Systems umfasst, wobei der Touchscreen in eine Komponente des Schweißsystems integriert sein kann. Der Touchscreen zeigt sowohl Informationen an, die auf ein Schaltnetzteil und/oder eine Systemablaufsteuereinheit bezogen sind, als auch ein oder mehrere Berührungsfelder, die einem Benutzer die numerische oder graphische Konfiguration der Leistungsteils oder der Ablaufsteuereinheit durch Berühren des Berührungsfelds oder der Berührungsfelder erlaubt.

Die US 2005/0162399 A1 offenbart eine Anzeige- und Eingabevorrichtung mit einem Touchscreen, einem Speicher für Layoutinformationen, der eine Vielzahl von Layoutinformationen speichert, die eine Anordnung einer Vielzahl von Funktionen, die auf dem Touchscreen angezeigt werden, festlegen, eine Auswahlvorrichtung, die aus der Vielzahl von Layoutinformationen bestimmte Layoutinformationen auswählt, und eine Steuereinheit, die basierend auf den durch die Auswahlvorrichtung ausgewählten Layoutinformationen eine Funktion auf dem Touchscreen anzeigt.

Die DE 93 01 390 U1 offenbart ein Schweißgerät mit einem eine Bedienungsfläche aufweisenden Gehäuse. Auf der Bedienungsfläche ist eine Anzeigefläche mit einer Mehrzahl von verschiedenen, elektronisch angesteuerten Anzeigepositionen für verschiedene Funktionen des Schweißgerätes vorgesehen. Ferner sind ein erstes Betätigungselement für die Funktionswahl-Auswahl jeweils einer einzustellenden Anzeigeposition und entsprechenden Funktion und ein zweites Betätigungselement für die Einstellung der Anzeige der jeweils ausgewählten Anzeigeposition vorgesehen. Die Anzeige ist an der jeweiligen Anzeigeposition durch Betätigung des zweiten Betätigungselementes entsprechend veränderbar.

Die US 4 717 805 A offenbart ein Benutzerinterface mit Steuerungsmöglichkeit für ein Widerstandsschweißgerät. Das Benutzerinterface erlaubt die visuelle Darstellung von Zeichendaten auf einer Frame-für-Frame-Basis unter Verwendung eines Menü- und Dialogsystems. Speichermittel speichern Zeichendaten, um unterschiedliche Frames für ein Element zu bilden. Als Antwort auf eine Benutzeranfrage wird jeder der Frames sofort auf Anzeigemitteln aufgerufen, so dass der Benutzer benötigte Schweißdaten, die mit einem ausgewählten Element assoziiert sind, eingeben kann. Während die eingegebenen Daten auf dem Bildschirm angezeigt werden, werden sie als Bestandteil des ausgewählten Elements in die Speichermittel geschrieben.

Die EP 1 702 707 A1 offenbart Systeme und Verfahren, die die umfassende Identifizierung und Bezeichnung von Schweißverfahren erleichtern soll. Dabei soll eine Konfigurationskomponente die Konfiguration des Schweißsystems hinsichtlich vordefinierter Verfahren und/oder Parameter und das Benennen des konfigurierten Schweißsystems erleichtern. Eine Speicherkomponente speichert das konfigurierte Schweißsystem an einem Speicherort ab. Die Konfiguration des Schweißsystems ist über eine Fernzugangskomponente veränderbar.

Die Einstellung der Schweißprozessparameter erfordert eine bestimmte Übung des Benutzers und im täglichen Betrieb erfährt ein Benutzer häufig eine starke Gewöhnung an die für ihn gebräuchliche Anordnung der Bedienelemente sowie die Funktionalität der Signalisierungsmittel. Eine Vorrichtung der eingangs genannten Art weist daher den Nachteil auf, dass im Falle eines Wechsels der Bedienungsperson oder eines Schweißgerätetyps mit einer abweichenden Anordnung der Bedienelemente auf dem Bedienfeld ein zeitaufwendiger Anlernprozess erforderlich ist, bevor die Zuverlässigkeit des Schweißergebnisses wieder hergestellt ist.

Daher liegt der Erfindung die Aufgabe zugrunde, eine Vorrichtung zum Schweißen oder Löten von Werkstücken der eingangs genannten Art dahingehend weiterzuentwickeln, dass bei einem Wechsel der Bedienungsperson bzw. einem Austausch des Gerätes eine Rückkehr zu einem zuverlässigen Schweißergebnis in einer möglichst kurzen Zeit erfolgen kann.

Diese Aufgabe wird erfindungsgemäß bei einer Vorrichtung der eingangs genannten Art und bei einem entsprechend ausgestalteten Verfahren dadurch gelöst, dass der Steuerungseinheit zugeordnete Konfigurierungsmittel vorgesehen sind, derart dass eine dem mindestens einen Bedienelement zugeordnete schweißprozessparameterbezogene Eigenschaft auf das mindestens eine Anzeigemittel räumlich abgebildet wird.

Die Erfindung zeichnet sich dadurch aus, dass das dem Bedienfeld zugeordnete Anzeigemittel im weitesten Sinne frei konfigurierbar gestaltet ist. Gemäß der erfindungsgemäßen Lösung erfolgt nämlich eine freie Zuordnung der jeweils gewünschten Eigenschaft, die auf den jeweils einzustellenden Schweißprozessparameter bezogen ist, zu einer entsprechenden räumlichen Position auf dem Anzeigemittel. Hierdurch wird es möglich, die Bedieneinheit bzw. das Bedienfeld eines Schweiß- oder Lötgerätes mit einem Anzeigemittel zu versehen, auf dessen Oberfläche eine virtuelle Darstellung in einer derartigen Weise erzeugt wird, bei der die Anordnung und Funktion der Bedienelemente dem Benutzer geläufig ist. Ein umständlicher Umgewöhnungsprozess kann hierdurch vermieden werden. Auch kann beim Übergang von einem ersten auf einen zweiten Benutzer desselben Schweißgeräts eine entsprechende Umkonfiguration der Bedienelemente auf dem Anzeigemittel in der Weise erfolgen, wie es der zweite Benutzer gewohnt ist. Dies erhöht die Flexibilität und ergibt eine praktische Anwendbarkeit der Erfindung insbesondere im Mehrschichtbetrieb.

Ein besonderer Vorteil ergibt sich dadurch, dass bei Schweißgeräten unterschiedlicher Struktur oder Provenienz ein an den Benutzer angepasstes und diesem geläufiges Bedienfeld mit entsprechender Anzeige generierbar ist. Dies erhöht die Arbeitssicherheit beim Schweißen erheblich.

Nach einer bevorzugten Ausführungsform der Erfindung ist vorgesehen, dass die dem mindestens einen Bedienelement zugeordnete schweißprozessparameterbezogene Eigenschaft auf dem mindestens einen Anzeigemittel als visuelle Anzeige von deren Funktion und/oder deren aktuellem physikalischen Wert darstellbar ist. Auf diese Weise lässt sich die dem jeweiligen Bedienelement zugehörige Funktion, d.h. die physikalische Größe, die mit dem Bedienelement angesprochen wird, visuell auf dem Anzeigemittel darstellen. Dies ergibt somit zusätzlich zu dem körperlich vorhandenen Bedienelement eine ergänzende "virtuelle" Anzeige seiner Funktion. Neben der Funktion als solcher lässt sich aber auch, beispielsweise in Form einer Skala, der jeweils aktuelle Wert der physikalischen Größe visuell darstellen. Somit lässt sich beispielsweise der vollständige Bedienvorgang des Bedienelementes auf der Anzeige abbilden, d.h. simulieren.

Eine bevorzugte Ausführungsform sieht vor, dass die Konfigurierungsmittel eine Speichereinrichtung umfassen, in welcher vorgegebene Standardkonfigurationen für die räumliche Abbildung der dem mindestens einen Bedienelement zugeordneten schweißprozessparameterbezogenen Eigenschaft auf das mindestens eine Anzeigemittel enthalten sind. Die abgespeicherte Standardkonfiguration ist dabei vorzugsweise dem jeweiligen Benutzer zugeordnet, so dass eine bestimmte und zielgerichtete Adaptierung erfolgen kann.

Wenn hierzu in einer weiter bevorzugten Ausführungsform die Speichereinrichtung eine Elementenbibliothek enthält, in der mehrere Bedienprofile vorab gespeichert hinterlegt sind, lassen diese sich in einfacher Weise abrufen oder bei Bedarf auch gegen neue Bedienprofile anderer Geräte austauschen.

Bevorzugt ist das Bedienfeld, auf dem sich mindestens ein Bedienelement befindet, eine Folientastatur.

Weiter bevorzugt ist das Anzeigemittel ein Touch-Screen. Dies hat den Vorteil, dass die Bedienung nicht nur über das Bedienelement als solches, sondern auch über dessen "virtuelle Abbildung" auf dem Anzeigemittel erfolgen kann, wodurch eine weitere Anpassung an die Gewohnheiten der Bedienungsperson möglich wird.

Weitere Ausgestaltungen der Erfindungen sind in den übrigen abhängigen Ansprüchen aufgeführt.

Die Erfindung wird im Folgenden anhand einer lediglich ein Ausführungsbeispiel zeigenden Zeichnung näher erläutert.

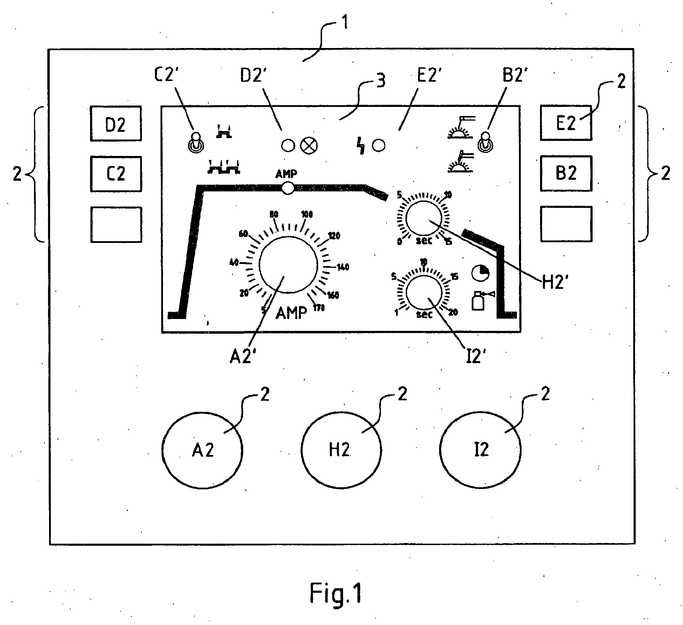

Die einzige Figur zeigt die Bedieneinheit einer Schweißvorrichtung nach dem Ausführungsbeispiel der Erfindung.

Die Schweißvorrichtung nach Ausführungsbeispiel weist eine Bedieneinheit (ohne Bezugszeichen) auf, welche beispielsweise bündig mit der dem Benutzer zugewandten Frontseite des Gerätegehäuses ausgeführt ist. Auf der Bedieneinheit befindet sich ein Bedienfeld 1, auf dem bestimmte Bedienelemente 2, beispielsweise Schalter oder Potentiometer dargestellt sind, ebenso wie Signalisierungselemente, die bestimmte Zustände oder Funktionen charakterisieren. Jedes der Bedienelemente 2 ist in der Regel einer bestimmten Eigenschaft zugeordnet, die jeweils auf einen Schweißprozessparameter bezogen ist.

Im Ausführungsbeispiel entspricht das mit Position A2 gekennzeichnete Bedienelement einem Drehknopf zur stufenlosen Einstellung des Schweißstromes. Das Bedienelement B2 betrifft einen Umschalter für das Schweißverfahren zwischen dem E-Hand-Schweißen und dem WIG-Schweißen. Der Umschalter C2 dient zur Umschaltung des Schweißprozesses vom 2-Takt-Betrieb auf einen 4-Takt-Betrieb. Der Drehknopf H2 kennzeichnet die Absenkzeit von einem Hauptstrom auf einen Endkraterstrom und der Drehknopf I2 die Dauer der Gasnachströmzeit. Mit dem Bezugszeichen D2 ist eine Signalleuchte zur Anzeige der Betriebsbereitschaft, mit dem Bezugszeichen E2 eine Signalleuchte zur Störungsanzeige bei Übertemperatur, Über- oder Unterspannung, gekennzeichnet.

Das Bedienfeld 1, auf dem die Bedienelemente 2, beispielsweise Schalter oder Potentiometer, angeordnet sind, ist in dem Ausführungsbeispiel als Folientastatur ausgebildet.

Des Weiteren ist dem Bedienfeld 1 ein Anzeigemittel 3 zugeordnet. Die Zuordnung kann im Ausführungsbeispiel so gewählt sein, dass das Anzeigemittel 3 in die Bedieneinheit des Schweißgerätes oder Lötgerätes integriert ist, so dass die Bedienungsperson sowohl die Bedienelemente 2 als auch das Anzeigemittel 3 im Blick hat.

Gemäß der erfindungsgemäßen Lösung erfolgt eine frei konfigurierbare Zuordnung der Funktion des jeweiligen Bedienelementes 2 zu einer entsprechenden räumlichen Position auf dem Anzeigemittel 3. Das bedeutet, dass auf der Oberfläche des Anzeigemittels 3 eine bestimmte Position festgelegt werden kann, an der die Funktion eines bestimmten Bedienelementes 2 dargestellt wird. Beispielsweise wird die Position des mit A2 gekennzeichneten Bedienelementes (Drehknopf zur stufenlosen Einstellung des Schweißstromes) auf der Oberfläche des Anzeigemittels 3 an einer Stelle festgelegt, die die Bedienungsperson aus Gewohnheit bevorzugt. An dieser Stelle wird aber nicht nur die grundsätzliche Funktion (Einstellung des Schweißstromes) abgebildet, sondern auch, beispielsweise in Form einer Skala, der Wertebereich für die Schweißstromeinstellung. Wenn die Bedienungsperson nun den Drehknopf für den Schweißstrom bedient und damit den Schweißstrom verändert, wird diese Veränderung auch an der entsprechenden Position auf der Anzeige dargestellt und damit für die Bedienungsperson sichtbar.

Aufgrund der Ausgestaltung des Anzeigemittels 3 als Touch-Screen lässt sich die Bedienung auch von der Anzeige aus direkt vornehmen, und zwar entweder ausschließlich über diese oder in Ergänzung zu der Bedienungsmöglichkeit über das als Drehknopf ausgestaltete ("körperliche")Bedienelement 2.

Die zuvor mit den Bezugszeichen A2, B2, C2, D2, E2, H2 bezeichneten Bedienelemente bzw. Signalisierungselemente finden sich auf der Oberfläche des Anzeigemittels 3 an den jeweiligen Positionen wieder, die mit A2', B2', C2', D2', E2', H2' bezeichnet sind.

Durch die oben beschriebenen Maßnahmen wird es ermöglicht, dass die Bedieneinheit eines Schweiß- oder Lötgerätes mit einer Anzeige in Form einer "Benutzeroberfläche" ausgestattet wird, auf der die Anordnung der Bedienelemente dem Benutzer geläufig ist.

Dies bedeutet, dass die oben näher beschriebenen, für den Schweißprozess kennzeichnenden Prozessparameter allesamt oder teilweise auf der Oberfläche des Anzeigemittels 3 untergebracht werden können, wobei deren räumliche Anordnung und Zuordnung untereinander frei konfigurierbar ist.

Die Konfiguration erfolgt durch eine entsprechende Software, mit der auf eine der Steuereinrichtung zugeordnete Elementenbibliothek zugegriffen werden kann.

Dieser Vorgang der Konfiguration zwecks Abbildung der einzelnen Funktionen zu den jeweiligen räumlichen Positionen kann einmalig oder kontinuierlich unter bestimmten Bedingungen erfolgen, je nach verwendetem Schweißgerättyp bzw. Benutzerprofil. Wenn die Konfiguration einmal festliegt, kann diese in eine Standardkonfiguration übernommen werden, die beispielsweise einem bestimmten Benutzer zugeordnet wird.

Wenn dieser Benutzer mit dem Schweißen beginnt, ruft er die ihm zugeordnete und von ihm gewohnte Konfiguration der Bedienelemente auf dem Bedienfeld mit dem Anzeigemittel 3 auf. Bei einem Benutzerwechsel ruft der nachfolgende Benutzer entsprechend die ihm zugeordnete Konfiguration auf, so dass die visuelle Darstellung auf dem Bedienfeld sich entsprechend umkonfiguriert.

Entsprechend lassen sich auch vorhandene Geräte mit einem erfindungsgemäß ausgestalteten Bedienfeld nachrüsten, so dass stets eine Anpassung der Gewohnheiten des Benutzers an das von ihm benutzte Gerät ermöglicht wird. Mit der erfindungsgemäßen Lösung ist es also möglich, ein gewünschtes Bedienfeld einer Schweißvorrichtung zu simulieren. Hierdurch kann der Kosten- und Zeitaufwand bei einem Gerätewechsel deutlich herabgesetzt werden.

## Patentansprüche

1. Vorrichtung zum Schweißen oder Löten von Werkstücken mit einem versorgungsspannungsgespeisten Leistungsteil mit einer Steuerungseinheit, der eine Bedieneinheit zugeordnet ist, über deren Bedienfeld (1) die Parameter für den Schweißprozess vom Benutzer vorgebbar sind, wobei das Bedienfeld (1) mindestens ein Bedienelement (2) aufweist und dem Bedienfeld (1) mindestens ein Anzeigemittel (3) zugeordnet ist, **dadurch gekennzeichnet, dass** der Steuerungseinheit zugeordnete Konfigurierungsmittel vorgesehen sind, derart dass eine dem mindestens einen Bedienelement (2) zugeordnete schweißprozessparameterbezogene Eigenschaft auf das mindestens eine Anzeigemittel (3) räumlich frei konfigurierbar abbildbar ist.

2. Vorrichtung nach Anspruch 1, **dadurch gekennzeichnet, dass** die dem mindestens einen Bedienelement (2) zugeordnete schweißprozessparameterbezogene Eigenschaft auf dem mindestens einen Anzeigemittel (3) als visuelle Anzeige von deren Funktion und/oder deren aktuellem physikalischen Wert darstellbar ist.

3. Vorrichtung nach Anspruch 1, **dadurch gekennzeichnet, dass** die Konfigurierungsmittel (6) eine Speichereinrichtung umfassen, in welcher vorgegebene Standardkonfigurationen für die räumliche Abbildung der dem mindestens einen Bedienelement (2) zugeordneten schweißprozessparameterbezogenen Eigenschaft auf das mindestens eine Anzeigemittel (3) enthalten sind.

4. Vorrichtung nach Anspruch 3, **dadurch gekennzeichnet, dass** die Speichereinrichtung eine Elementenbibliothek enthält, in der mehrere Bedienprofile vorabgespeichert hinterlegt sind.

5. Vorrichtung nach Anspruch 4, **dadurch gekennzeichnet, dass** die Zuordnung der schweißprozessparameterbezogenen Eigenschaft zu dem mindestens einen Bedienelement (2) über eine Software erfolgt.

6. Vorrichtung nach einem der Ansprüche 1-5, **dadurch gekennzeichnet, dass** das Bedienelement (2) ein vom Benutzer betätigbares Bedienelement (2), insbesondere ein Bedienknopf und/oder ein Betätigungsschalter, ist.

7. Vorrichtung nach einem der Ansprüche 1-6, **dadurch gekennzeichnet, dass** das Bedienfeld (1), auf dem sich das mindestens eine Bedienelement (2) befindet, eine Folientastatur ist.

8. Vorrichtung nach einem der vorhergehenden Ansprüche, **dadurch gekennzeichnet, dass** das Anzeigemittel (3) ein Touch-Screen Anzeigemittel ist

9. Vorrichtung nach einem der Ansprüche 1-7, **dadurch gekennzeichnet, dass** das Anzeigemittel (3) Bestandteil des Bedienfeldes (1) ist.

10. Verfahren zum Schweißen oder Löten von Werkstücken mittels einer Vorrichtung enthaltend ein versorgungsspannungsgespeistes Leistungsteil mit einer Steuerungseinheit, der eine Bedieneinheit zugeordnet ist, über deren Bedienfeld (1) die Parameter für den Schweißprozess vom Benutzer vorgebbar sind, wobei das Bedienfeld (1) mindestens ein Bedienelement (2) und mindestens ein Anzeigemittel (3) aufweist, **dadurch gekennzeichnet, dass** mittels einer der Steuerungseinheit zugeordneten Konfigurierungseinheit eine dem mindestens einen Bedienelement (2) zugeordnete schweißprozessparameterbezogene Eigenschaft auf das mindestens eine Anzeigemittel (3) räumlich frei konfigurierbar abgebildet wird.

11. Verfahren nach Anspruch 10, **dadurch gekennzeichnet, dass** die Funktion und/oder der aktuelle physikalische Wert des Bedienungselementes (2) auf dem mindestens einen Anzeigemittel (3) visuell dargestellt wird.

## Claims

1. Device for the welding or soldering of workpieces having a supply voltage-fed power section having a control unit to which an operating unit is allocated, the control panel (1) of which can be used by the user to determine the parameters for the welding process, wherein the control panel (1) has at least one operating element (2) and at least one means of displaying information (3) is allocated to the control panel (1), **characterised in that** means of configuration allocated to the control unit are provided such that a welding process parameter-related property allocated to the at least one operating element (2) can be displayed in a spatially freely configurable manner on the at least one means of displaying information (3).

2. Device according to Claim 1, **characterised in that** the welding process parameter-related property allocated to the at least one operating element (2) can be shown on the at least one means of displaying information (3) as a visual display of its function and/or current physical value.

3. Device according to Claim 1, **characterised in that** the means of configuration (6) comprises a storage device containing predefined standard configurations for the spatial depiction of the welding process parameter-related property allocated to the at least one operating element (2) on the at least one means of displaying information (3).

4. Device according to Claim 3, **characterised in that** the storage device contains an element library in which several operating profiles are pre-stored.

5. Device according to Claim 4, **characterised in that** the allocation of the welding process parameter-related property to the at least one operating element (2) is carried out by means of software.

6. Device according to any one of Claims 1 to 5, **characterised in that** the operating element (2) is an operating element (2) which can be actuated by the user, in particular an operating button and/or an actuation switch.

7. Device according to any one of Claims 1 to 6, **characterised in that** the control panel (1) on which the at least one operating element (2) can be found is a membrane keyboard.

8. Device according to any one of the preceding claims, **characterised in that** the means of displaying information (3) is a touch-screen means of displaying information.

9. Device according to any one of Claims 1 to 7, **characterised in that** the means of displaying information (3) is part of the control panel (1).

10. Method for the welding or soldering of workpieces by means of a device comprising a supply voltage-fed power section having a control unit to which an operating unit is allocated, the control panel (1) of which can be used by the user to determine the parameters for the welding process, whereby the control panel (1) has at least one operating element (2) and at least one means of displaying information (3), **characterised in that** a welding process parameter-related property allocated to the at least one operating element (2) can be displayed in a spatially freely configurable manner on the at least one means of displaying information (3) by means of a configuration unit allocated to the control unit.

11. Method according to Claim 10, **characterised in that** the function and/or the current physical value of the operating element (2) is visually displayed on the at least one means of displaying information (3).

## Revendications

1. Dispositif destiné au soudage ou au brasage de pièces à travailler avec une partie puissance alimentée par une tension de réseau avec une unité de contrôle à laquelle est assujetti une unité de commande, la zone de commande (1) de celui-ci permettant la saisie des paramètres du processus de soudage par l'utilisateur, tel que la zone de commande (1) possède au moins un élément de commande (2), et qu'au moins un moyen d'affichage (3) est assujetti à la zone de commande (1), **caractérisé en ce que** moyens de configuration assujettis à l'unité de contrôle sont fournis, en telle sorte que puisse s'afficher, sur le au moins un moyen d'affichage (3), dans une position librement configurable, une propriété se rapportant à un paramètre du processus de soudage, ladite propriété étant assujettie au au moins un élément de commande (2).

2. Dispositif selon la revendication 1, **caractérisé en ce que** la propriété se rapportant à un paramètre du processus de soudage, à laquelle est assujetti au au moins un élément de commande (2), peut être représentée sur le au moins un moyen d'affichage (3) sous la forme d'une indication visuelle de sa fonction et/ou de sa valeur physique actuelle.

3. Dispositif selon la revendication 1, **caractérisé en ce que** les moyens de configuration (6) comportent une unité de stockage, dans laquelle sont conservées des configurations standard prédéterminées, concernant le positionnement spatial de la propriété se rapportant à un paramètre du processus de soudage, assujettie à au moins un élément de commande (2), et affichée sur le au moins un moyen d'affichage (3).

4. Dispositif selon la revendication 3, **caractérisé en ce que** l'unité de stockage comporte une bibliothèque d'éléments dans laquelle sont archivés plusieurs profils de commande préalablement mémorisés.

5. Dispositif selon la revendication 4, **caractérisé en ce que** l'assignation de la propriété se rapportant à un paramètre du processus de soudage, à au moins un élément de commande (2), se fait à l'intervention d'un logiciel.

6. Dispositif selon l'une quelconque des revendications 1 à 5, **caractérisé en ce que** l'élément de commande (2) est un élément de commande (2) manipulable par l'utilisateur, en particulier, un bouton de commande et/ou un interrupteur de commande.

7. Dispositif selon l'une quelconque des revendications 1 à 6, **caractérisé en ce que** la zone de commande (1), sur lequel se trouve le au moins un élément de commande (2), est un clavier à membrane.

8. Dispositif selon l'une quelconque des revendications précédentes, **caractérisé en ce que** le moyen d'affichage (3) est un affichage sur un écran sensitif.

9. Dispositif selon l'une quelconque des revendications 1 à 7, **caractérisé en ce que** le moyen d'affichage (3) est un élément constitutif de la zone de commande (1).

10. Procédé de soudage ou de brasage de pièces à travailler, faisant appel à un dispositif comportant une partie puissance alimentée par une tension de réseau avec une unité de contrôle à laquelle est assujetti une unité de commande, dont la zone de commande (1) permet l'entrée des paramètres du processus de soudage par l'utilisateur, la zone de commande (1) possédant au moins un élément de commande (2) et au moins un moyen d'affichage (3), **caractérisé en ce que**, à l'aide d'une unité de configuration assujettie à l'unité de contrôle, puisse s'afficher une propriété se rapportant à un paramètre du processus de soudage, assujettie à au moins un élément de commande (2), sur au moins un moyen d'affichage (3), en une position librement configurable.

11. Procédé selon la revendication 10, **caractérisé en ce que** la fonction et/ou la valeur physique actuelle de l'élément de commande (2) est représentée de façon visuelle sur le au moins un moyen d'affichage (3).
